# EUROPEAN PATENT SPECIFICATION

(11) **EP 2 714 264 B1**
(45) Date of publication and mention of the grant of the patent: **02.05.2018**
(21) Application number: 12794009.6
(22) Date of filing: 14.05.2012
(51) Int. Cl.: B01J 21/06, B01J 23/46, B01J 23/10, B01J 19/26, F02K 9/34

(54) **CATALYST, GAS GENERATOR, AND THRUSTER WITH IMPROVED THERMAL CAPABILITY AND CORROSION RESISTANCE**
KATALYSATOR, GASGENERATOR UND TRIEBWERK MIT VERBESSERTER WÄRMEKAPAZITÄT UND KORROSIONSBESTÄNDIGKEIT
CATALYSEUR, GÉNÉRATEUR DE GAZ, ET PROPULSEUR AYANT UNE CAPACITÉ THERMIQUE AMÉLIORÉE ET UNE RÉSISTANCE À LA CORROSION AMÉLIORÉE

(30) Priority: 01.06.2011 US 201113151155
(43) Date of publication of application: 09.04.2014
(73) Proprietor: Aerojet Rocketdyne, Inc., Rancho Cordova, CA 95742 (US)
(72) Inventor: MASSE, Robert, K., Redmond, WA 98052 (US); SARETTO, Silvano, R., Snoqualmie, WA 98065 (US); LIU, Junli, Kenmore, WA 98028 (US)
(74) Representative: Hull, James Edward
(86) International application number: PCT/US2012/037846
(87) International publication number: WO 2012/166335

(56) References cited:
- WO-A1-97/05057
- US-A- 3 375 127
- US-A- 4 348 303
- US-A- 5 485 722
- US-A- 5 485 722
- US-A1- 2003 139 290
- US-A1- 2007 184 971
- US-A1- 2007 184 971
- US-B1- 6 984 273
- US-B2- 7 919 659

## Description

### BACKGROUND

Monopropellant rocket propulsion systems, which employ catalysts to energetically instigate the reaction of the propellant into hot gases, provide cost and reliability advantages that have led monopropellant systems to dominate near-earth and exploration missions over bipropellant systems. Hydrazine, the monopropellant in most- common use at the present, time, is toxic and must be handled in closed containers, thereby imparting indirect costs associated with the need for special ground support equipment and procedures, and through the suspension of other launch preparation activities for hazard avoidance by associated launch personnel during spacecraft propellant loading operations. Additionally, concerns related to risks of accidental toxic exposure have largely prevented the application of monopropellants to tactical and strategic systems.

A number of low-toxicity monopropellants have been developed to circumvent the limitations of hydrazine, and in some cases, provide improved performance over hydrazine. Many of these monopropellants operate at flame temperatures substantially exceeding that of hydrazine and of the current capabilities of catalysts used in traditional catalytic gas generators and thrusters. A number of these advanced monopropellants, for example, nitrous oxide, peroxides, and ionic liquids, such as ammonium dinitramide-based and hydroxylammonium nitrate-based propellants, produce corrosive and/or highly oxidizing reaction intermediates or products, such that the thrusters. catalytic gas generators, and especially the catalysts must be resistant to damage by these intermediates or products. Catalysts, gas generators, and thrusters currently used in monopropellant systems have typically demonstrated limited life capability due to a variety of causes of degradation.

Accordingly, there remains a need to provide new and useful catalysts for monopropellants.

US 2007/184971 discloses a prior art gas generator, and a method for promoting the reaction of a propellant into reaction products comprising gas, having the features of the preamble of claims 1 and 7. US 2003/139290 discloses a process to stabilise low-temperature, tin-oxide-based oxidation/reduction catalysts.

### SUMMARY

From one aspect, the present invention provides a gas generator in accordance with claim 1.

From another aspect, the present invention provides a method for promoting the reaction of a propellant into reaction products comprising gas in accordance with claim 7.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a schematic illustration showing a gas generator in accordance with one embodiment of the invention; and
FIGURE 2 is a schematic illustration showing a thruster in accordance with one embodiment of the invention.

### DETAILED DESCRIPTION

Disclosed is a catalyst that includes a carrier and an active metal deposited on the carrier. The carrier comprises hafnia. Hafnia is also known as hafnium (IV) oxide or hafnium dioxide. The chemical formula of hafnia is HfO₂. The catalyst performance improves as density approaches the theoretical maximum, such that a theoretical density of the carrier of at least 97% is required. The preferred area per unit volume of catalyst is in the range of 0.05 to 40 m²/g.

The carrier may be any shape including, but not limited to, pellets, cylindrical rods, round shot, irregular, formed into a matrix, such as honeycomb or grid, and the like. The catalyst includes at least one or more active metals on a surface of the carrier. The active metal is at least one metal from die "platinum" group of metals. The platinum group of metals includes rhodium, ruthenium, palladium, osmium, iridium, and platinum. The percent of the active metal or metals can range from 0.1% to 50% by weight based on the total weight of the catalyst, with 5% to 30% being suitable for most applications.

The earner is used to support the active metal or metals. In one embodiment, the carrier can be essentially 100% hafnia or hafnia with additional constituents. Additional constituents, such as ceria and/or yttria, or both, may be included in the hafnia carrier to improve resistance to thermal shock, chemical attack, mechanical properties, or one or more of the above. Ceria is also known as cerium (IV) oxide, eerie oxide, cerium oxide, or cerium dioxide. The chemical formula is CeO₂. Yttria is also known as yttrium (III) oxide, and has a chemical formula of Y₂O₃. When additional constituents, such as ceria or yttria, or both, are added to the hafnia carrier for the above-stated reasons, the additional constituents may be referred to as stabilizers, and the catalyst may be referred to as a "stabilized" catalyst. In cases where the stabilizer alters the phase distribution of the earner, the amount of phase stabilization may be varied with the amount of added stabilizer, best catalyst performance typically being achieved with phase stabilization between 70% and 100%. Additionally, a portion of the hafnia may substituted by zirconia in up to an equal amount by weight to reduce the cost and weight of the catalyst. Zirconia is also known as zirconium oxide or zirconium dioxide, and has the chemical formula ZrO₂.

To obtain a hafnia carrier with a high theoretical density, the hafniacontaining carrier is manufactured through the process known as hot isostatic pressing. Reference may be made to numerous patents, such as U.S. Patent Nos. 4,952,353; and 5,080,841.
The additional constituents of ceria and/or yttria and/or zirconia may be added with the hafnia.

Once the hafnia carrier has been produced, the active metal may be applied to a surface of the carrier by various methods. Reference may be made to U.S. Patent No. 4,348,303. In one embodiment, the active metal is deposited on the carrier by soaking the carrier with a salt solution of the metal or spraying a metal salt solution on the carrier. For example, iridium can be deposited on the carrier by first forming the iridium trichloride or the iridium tetrachloride salt and then dissolving the salt in an alcohol, for example. Ruthenium may be deposited on the carrier by forming ruthenium trichloride or ruthenium tetrachloride, and also dissolving the salt in an alcohol. Rhodium may be deposited onto the carrier by formation of, and subsequent dissolution of, rhodium chloride salt. Suitable concentrations of the salt solution can be as much as 10% by weight of the salt based on the weight of the combined weight of salt and solvent. However, 5% by weight salt solutions are also suitable. After soaking the carrier in, or spraying the carrier with, the salt solution, the earner can be dried by tumbling in hot air. Applying the metal salt, solution followed by drying may be performed multiple times. After drying, the salt remains on the surface of the carrier, but the metal salt still needs to be converted into a metal oxide. Depending on the metal used, the carrier can be heated to temperatures in excess of 500°F to 600°F (260°C to 316°C) to oxidize and activate the metal. Metal loading will typically vary between 0.1% and 50%. High metal loading is preferred for maximum effectiveness and catalyst life, but low metal loading embodiments can be used to reduce cost for cases where maximum reactivity and life are not needed.

In one embodiment, the hafnia catalyst with one or more active metals is useful for promoting the reaction of propellants, and particularly monopropellants. The stabilized hafnia catalyst with one or more active metals is similarly useful, Monopropellants generally refer to compositions that may be contained within a single storage tank in contrast to bipropellant systems. Monopropellants may be gaseous or liquid, and may include a single chemical, or a mixture of chemicals, such as a combination of a fuel and an oxidizer, and optional ly one or more coolants or solvents, such as water. The reaction of monopropellants is exothermic, producing large volumes of gases. Because the reaction is highly exothermic, the reaction is generally self-sustaining once started. The reaction of propellants to produce product gases has a plurality of uses. The gas generated by the reaction of propellants may be used to provide propulsion, or to operate a turbine for the generation of electrical power, or to run other mechanical systems.

When provided as a single chemical, the monopropellant can include hydrazine. Hydrazine propellants include, but are not limited to, 100% hydrazine, symmetrical dimethylhydrazine, unsymmetrical dimethylhydrazine, and monomethylhydrazine. Other single chemical monopropellants include, but are not limited to, hydrogen peroxide and either gaseous or liquid nitrous oxide.

The monopropellant can also be formed as a mixture of one or more single-chemical monopropellants, as above, optionally with the addition of diluents, stabilizers, and other modifiers, e.g., hydrogen peroxide monopropellant usually includes water to stabilize it in storage.

The monopropellant may alternatively comprise an oxidizer and a fuel, and optionally one or more diluents or solvents, such as water, ammonia, or helium (for gaseous monopropellants).

Representative oxidizers include, but are not limited to, oxygen, and inorganic or organic nitrates, such as hydroxylammonium nitrate, aminoguanidine dinitrate, guanidine nitrate, ammonium nitrate, ammonium dinitramide, or hydroxyethylhydrazinium nitrate. Derivatives of hydroxylammonium nitrate can also be used as the oxidizer, including, but not limited to, the N-methyl, N-ethyl, O-methyl, or O-ethyl derivatives of hydroxylammonium nitrate.

In some cases intended for storage under pressure or at low temperature, monopropellants may be formed of constituents that are not ordinarily of the same phase at ambient atmospheric conditions, as exemplified by a mixture of nitrous oxide and methanol.

Representative fuels include, but are not limited to hydrogen, hydrocarbons, glycine, betaine, alcohols, and amines and amine nitrates, such as triethanolammonium nitrate, hydroxylamine, dimethylhydroxylammonium nitrate, diethylhydroxylammonium nitrate, diethylhydroxylamine, triethylenediamine dinitrate, diethylenetriamine dinitrate, ethylenediamine dinitrate, methylammonium nitrate, dimethylammonium nitrate, trimethylammonium nitrate, methylhydrazinium nitrate, ethylenedihydrazinium dinitrate, hydrazinium nitrate, hydroxyethylhydrazinium nitrate, di(hydroxyethyl)hydrazinium nitrate, hydrazinium formiate, hydrazinium acetate, hydrazinium carbazate, hydrazinium aminoacetate, triaminoguaninidiura nitrate, carbohydrazide, carbohydrazide nitrate, carbohydrazide dinitrate, urea, fomiamide, N-methylforamide, N,N-dimethylformamide, guanidinium nitrate, 1,4-bis-cubanedi ammonium dinitrate, 3-nitro-1,2,4-triazol(5)one hydrazinium salt, 3-nitro-1,2,4-triazol(5)one ammonium salt, N-methyl-2-pyrrolidone, aziridine-derivatives, azetane derivatives, and combinations thereof.

The foregoing lists of oxidizers and fuels are not intended to be exhaustive, but merely representative. Further propellants that may be used with the catalysts disclosed herein may be found in U.S. Patent Nos. 6,984,273; 5,648,052; 5,485,722: 4,047,988; and 5,223,057.

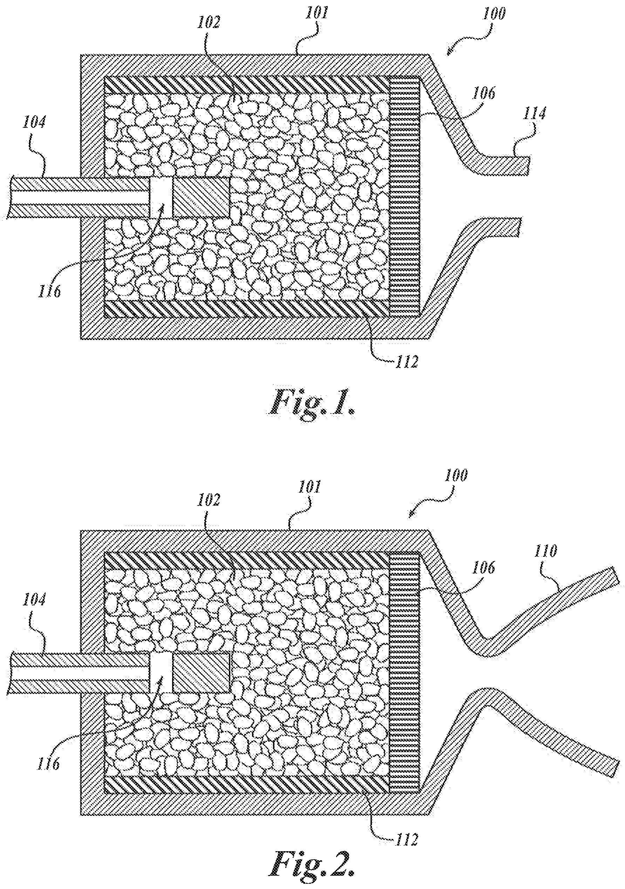

The catalyst may be included in a catalyst chamber and used as a gas generator as illustrated in FIGURE 1, Generally, a gas generator 100 (or catalytic reactor) is supplied propellant from a storage tank (not shown). In monopropellant systems, a single storage tank may serve to store the oxidizer, fuel, and a solvent. However, in other embodiments, multiple storage tanks may be used to contain the oxidizer, the fuel, and the solvent prior to mixing, either external or internal to the gas generator 100. The gas generator 100 includes an enclosed housing 101 for holding a catalyst bed 102 within the enclosed housing 101, The enclosed housing 101 may be cylindrical. The internal walls of the housing 101 can be shielded by an insulator 112, preferably a ceramic such as alumina, to reduce heat transfer to the housing 101, Individual catalyst particles in the catalyst bed 102 can he formed in the shape of pellets, which are preferably densely packed within the housing 101 and retained by a porous plate 106 affixed to the housing 101. The bed plate 106 includes perforations which are sufficiently narrow to restrain the catalyst granules while providing sufficiently large total open area to allow the flow of generated reaction gas products through it and toward the egress outlet 114. The bed plate 106 can be made from a refractory metal, or a combination of metals, including, but not limited to, niobium, molybdenum, tantalum, tungsten, and rhenium. A coating, such as iridium, may also be applied on the refractory metal of the bed plate 106. The propellant may be delivered to the catalyst bed 102 via one or a plurality of injection elements 104 connected to one or a multiplicity of injection sites 116 which may be formed as slots or holes that are sufficiently thin to prevent admittance of catalyst granules in the catalyst bed 102, but of sufficient total area to admit the flow of propellant without excessive pressure drop. In one embodiment, these one or more injection elements 104 may penetrate into the catalyst bed 102 such that the propellant is injected at some distance from the internal walls of the housing injector and/or the housing 101. The propellant reacts on contact with the catalyst 102 to produce product gases that leave the catalyst bed 102 through the perforations in the bed plate 106 and are directed through the outlet 114. The outlet 114 may be connected to one of a multiplicity of devices such that the gas is utilized to produce either thrust or work. For example, the gases may be directed into a plenum for storage and later vented through one or more valves to produce propulsive thrust for orbiting satellites, space probes, launch vehicles, missiles, or any other kind of vehicle, in another example, the gases may be directed to a turbine which, in turn, is connected to a generator to produce electrical power, in other embodiments, the gases exiting the gas generator 100 may be connected to mechanical devices, such as compressors, pumps, and the like. The particular application or load is not limiting of the invention.

Alternatively, the gas generator 100 can be directly connected to a nozzle 110 as illustrated in FIGURE 2. in the configuration of the gas generator 100 and the nozzle 110, the device may be regarded as a self-contained thruster to produce propulsive thrust for orbiting satellites, space probes, launch vehicles, missiles, or any other kind of vehicle.

FIGURES 1 and 2 are highly schematic illustrations depicting a gas generator and thruster showing the basic components of the gas generator and thruster. It is to be appreciated that the components omitted from the gas generator and thruster of FIGURES 1 and 2 will be known to those of skill in the art. For example, reference may be made to U.S. Patent Nos. 5,648,052; 4,352,782; and 4,069,664. It is further to be appreciated that reaction promoting characteristics of the gas generator 100 described above can be tailored through the substitution and/or the combination of any number of particles or elements of catalysts made according to any geometry or size without altering the inventive concepts embodied herein.

### EXAMPLES

The following summarizes a series of tests, selected from a larger body of tests conducted by Aerojet between July 20, 2010 and April 7, 2011 as part of an ongoing internal research and development program, which are here provided as examples demonstrating the utility of the invention:
Test 1 - Aerojet conducted life testing of a catalyst of the known art comprising approximately 5% iridium deposited on stabilized zirconia. Testing comprised loading the catalyst into a heavyweight test thruster and operating at a proscribed duty cycle until oscillation in the thruster interior pressure, known to those skilled in the art as "chamber pressure roughness" and which increases as damage occurs to the catalyst, exceeded 75% of the design chamber pressure in amplitude. This occurred after approximately 30 minutes accumulated firing time.
Test 2 - Aerojet conducted a life test which was identical in all respects to Test 1 except that the test thruster was loaded with an approximately 5% iridium-loaded hafnia catalyst made according to the present invention, which achieved approximately 53 minutes accumulated firing time before exhibiting the same test termination criteria.
Test 3 - Aerojet conducted a life test in which a modified test thruster was loaded with identical catalyst to that used for Test 2 which achieved approximately 56 minutes accumulated firing time before exhibiting the same test termination criteria.
Test 4 - Aerojet conducted a life test which was identical in all respects to Test 3 except that the test thruster was loaded with an approximately 5% iridium-loaded ceria-stabilized hafnia catalyst made according to the present invention, which achieved approximately 146 minutes accumulated firing time before exhibiting the same test termination criteria.
Test 5 - Aerojet conducted a life test in which a further modified test thruster was loaded with identical catalyst to that used for Test 4 which achieved approximately 285 minutes accumulated firing time before exhibiting the same test termination criteria.
Test 6 - Aerojet conducted a life test which was identical in all respects to Test 5 except that the test thruster was loaded with an approximately 5% iridium-loaded yttria-stabilized hafnia catalyst made according to the present invention, and the thruster was operated at reduced internal pressure, which achieved approximately 689 minutes accumulated firing time before exhibiting the same test termination criteria.
While illustrative embodiments have been disclosed and described, it will be appreciated that various changes can be made therein without departing from the scope of the invention.

## Claims

1. A gas generator (100), comprising:
a housing (101) defining a space within the housing (101);
a catalyst (102) within the space within the housing (101), wherein the catalyst (102) comprises a carrier comprising hafnia, and at least one active metal on a surface of the carrier;
a propellant inlet (116) to the housing (101); and
an outlet (114) from the housing for reaction products comprising gas;
**characterised in that** the carrier has been hot isostatically pressed to a theoretical density of at least 97%.

2. The gas generator (100) of claim 1, wherein the carrier further comprises zirconia in up to an equal weight to hafnia.

3. The gas generator (100) of claim 1 or 2, wherein the catalyst (102) comprises a bed of particles.

4. The gas generator (100) of claims 1, 2 or 3, wherein the carrier further comprises a stabilizer, and optionally wherein the stabilizer comprises a material selected from a group comprising ceria and yttria, or any combination thereof.

5. The gas generator (100) of any preceding claim, further comprising a nozzle (110) connected to the outlet (114).

6. The gas generator (100) of any preceding claim, where the catalyst particles have a maximum dimension between 0.5 mm and 2.0 mm.

7. A method for promoting the reaction of a propellant into reaction products comprising gas, said method comprising:
contacting a propellant with a catalyst, wherein the catalyst comprises a carrier comprising hafnia, and at least one active metal on a surface of the carrier; and
converting the propellant into one or more reaction products on contact with the catalyst;
**characterised in that**
the method further comprises hot isostatically pressing the carrier to a theoretical density of at least 97%.

8. The method of claim 7, wherein the propellant comprises:
an oxidizer selected from a group consisting of oxygen, hydroxylammonium nitrate, ammonium nitrate, ammonium perchlorate, lithium perchlorate, ammonium dinitraniide, and hydroxyethylhydrazinium nitrate, or any combination thereof; or
a fuel selected from a group consisting of hydrogen, glycine, betaine, hydrocarbons, alcohols, triethanolamine nitrate, tris(2-aminoethyl)amine trinitrate, hydrazinium nitrate and hydroxyethylhydrazinium nitrate, or any combination thereof.

9. The method of claim 7 or 8, further comprising directing the reaction products through a nozzle (110) to generate thrust.

10. The method of any of claims 7 to 9, wherein the propellant comprises an oxidizer, a fuel, and water.

## Patentansprüche

1. Gasgenerator (100), umfassend:
ein Gehäuse (101), das einen Raum innerhalb des Gehäuses (101) definiert;
einen Katalysator (102) innerhalb des Raums innerhalb des Gehäuses (101), wobei der Katalysator (102) einen Hafniumdioxid umfassenden Träger umfasst, und mindestens ein aktives Metall auf einer Fläche des Trägers;
einen Treibmitteleinlass (116) zu dem Gehäuse (101); und
einen Auslass (114) von dem Gehäuse für Reaktionsprodukte, die Gas umfassen;
**dadurch gekennzeichnet, dass** der Träger heißisostatisch zu einer theoretischen Dichte von mindestens 97 % gepresst wurde.

2. Gasgenerator (100) nach Anspruch 1, wobei der Träger weiter Zirconiumdioxid mit einem Gewicht umfasst, das dem von Hafniumdioxid gleicht.

3. Gasgenerator (100) nach Anspruch 1 oder 2, wobei der Katalysator (102) ein Teilchenbett umfasst.

4. Gasgenerator (100) nach Anspruch 1, 2 oder 3, wobei der Träger weiter einen Stabilisator umfasst, und wobei der Stabilisator wahlweise ein Material umfasst, das aus einer Gruppe ausgewählt ist, die Cerdioxid und Yttriumoxid oder eine Kombination davon umfasst.

5. Gasgenerator (100) nach einem der vorstehenden Ansprüche, weiter umfassend eine Düse (110), die mit dem Auslass (114) verbunden ist.

6. Gasgenerator (100) nach einem der vorstehenden Ansprüche, wobei die Katalysatorteilchen eine maximale Größe von zwischen 0,5 mm und 2,0 mm aufweisen.

7. Verfahren zum Unterstützen der Reaktion eines Treibmittels in Reaktionsprodukten, die Gas umfassen, wobei das Verfahren umfasst:
Inkontaktbringen eines Treibmittels mit einem Katalysator, wobei der Katalysator einen Hafniumdioxid umfassenden Träger umfasst, und mindestens ein aktives Metall auf einer Fläche des Trägers; und
Umwandeln des Treibmittels in ein oder mehrere Reaktionsprodukte bei Kontakt mit dem Katalysator;
**dadurch gekennzeichnet, dass**
das Verfahren weiter das heißisostatische Pressen des Trägers zu einer theoretischen Dichte von mindestens 97 % umfasst.

8. Verfahren nach Anspruch 7, wobei das Treibmittel umfasst:
ein Oxidationsmittel, das aus einer Gruppe ausgewählt ist, die aus Sauerstoff, Hydroxylammoniumnitrat, Ammoniumnitrat, Ammoniumperchlorat, Lithiumperchlorat, Ammoniumdinitraniid und Hydroxyethylhydraziniumnitrat oder einer beliebigen Kombination davon besteht; oder
einen Brennstoff, der aus einer Gruppe ausgewählt ist, die aus Wasserstoff, Glycin, Betain, Kohlenwasserstoffen, Alkoholen, Triethanolaminnitrat, Tris (2-aminoethyl) Amintrinitrat, Hydraziniumnitrat und Hydroxyethylhydraziniumnitrat oder einer Kombination davon besteht.

9. Verfahren nach Anspruch 7 oder 8, weiter umfassend das Leiten der Reaktionsprodukte durch eine Düse (110) zum Erzeugen von Schub.

10. Verfahren nach einem der Ansprüche 7 bis 9, wobei das Treibmittel ein Oxidationsmittel, einen Brennstoff und Wasser umfasst.

## Revendications

1. Générateur de gaz (100), comprenant :
un logement (101) définissant un espace au sein du logement (101) ;
un catalyseur (102) au sein de l'espace au sein du logement (101), dans lequel le catalyseur (102) comprend un support comprenant de l'oxyde d'hafnium et au moins un métal actif sur une surface du support ;
une admission de propergol (116) vers le logement (101) ; et
une sortie (114) depuis le logement pour des produits de réaction comprenant du gaz ;
**caractérisé en ce que** le support a été pressé isostatiquement à chaud à une densité théorique d'au moins 97 %.

2. Générateur de gaz (100) selon la revendication 1, dans lequel le support comprend en outre de l'oxyde de zirconium jusqu'à un poids égal à l'oxyde d'hafnium.

3. Générateur de gaz (100) selon la revendication 1 ou 2, dans lequel le catalyseur (102) comprend un lit de particules.

4. Générateur de gaz (100) selon les revendications 1, 2 ou 3, dans lequel le support comprend en outre un stabilisant, et facultativement dans lequel le stabilisant comprend un matériau sélectionné dans le groupe comprenant l'oxyde de cérium et l'oxyde d'yttrium, ou une toute combinaison de ceux-ci.

5. Générateur de gaz (100) selon une quelconque revendication précédente, comprenant en outre une buse (110) raccordée à la sortie (114).

6. Générateur de gaz (100) selon une quelconque revendication précédente, dans lequel les particules de catalyseur ont une dimension maximale comprise entre 0,5 mm et 2,0 mm.

7. Procédé pour promouvoir la réaction d'un propergol en produits de réaction comprenant du gaz, ledit procédé comprenant :
la mise en contact d'un propergol avec un catalyseur, dans lequel le catalyseur comprend un support comprenant de l'oxyde d'hafnium, et au moins un métal actif sur une surface du support ; et
la conversion du propergol en un ou plusieurs produits de réaction au contact du catalyseur ;
**caractérisé en ce que**
le procédé comprend en outre le pressage isostatique à chaud du support jusqu'à une densité théorique d'au moins 97 %.

8. Procédé selon la revendication 7, dans lequel le propergol comprend :
un comburant sélectionné dans le groupe consistant en l'oxygène, le nitrate d'hydroxylammonium, le nitrate d'ammonium, le perchlorate d'ammonium, le perchlorate de lithium, le dinitramide d'ammonium et le nitrate d'hydroxyéthylhydrazinium, ou toute combinaison de ceux-ci ; ou
un combustible sélectionné dans le groupe consistant en l'hydrogène, la glycine, la bétaïne, les hydrocarbures, les alcools, le nitrate de triéthanolamine, le trinitrate de tris(2-aminoéthyl)amine, le nitrate d'hydrazinium et le nitrate d'hydroxyéthylhydrazinium, ou toute combinaison de ceux-ci.

9. Procédé selon la revendication 7 ou 8, comprenant en outre le fait de diriger des produits de réaction à travers une buse (110) pour générer une poussée.

10. Procédé selon l'une quelconque des revendications 7 à 9, dans lequel le propergol comprend un comburant, un combustible et de l'eau.
